(19)

**Europäisches Patentamt**
**European Patent Office**
**Office européen des brevets**

(11)     **EP 1 436 168 B1**

(12)     **EUROPÄISCHE PATENTSCHRIFT**

(45) Veröffentlichungstag und Bekanntmachung des Hinweises auf die Patenterteilung:
**23.01.2008   Patentblatt 2008/04**

(21) Anmeldenummer: **02781126.4**

(22) Anmeldetag: **04.10.2002**

(51) Int Cl.:
*B60R 16/02* (2006.01)     *H02J 7/14* (2006.01)

(86) Internationale Anmeldenummer:
**PCT/DE2002/003768**

(87) Internationale Veröffentlichungsnummer:
**WO 2003/033308 (24.04.2003 Gazette 2003/17)**

(54) **VERFAHREN UND VORRICHTUNG ZUR ERMITTLUNG DER IN EINEM BORDNETZ VERFÜGBAREN ELEKTRISCHEN LEISTUNG**

METHOD AND DEVICE FOR DETERMINING AVAILABLE ELECTRIC POWER IN AN INSTRUMENT PANEL

PROCEDE ET DISPOSITIF PERMETTANT DE DETERMINER LA PUISSANCE ELECTRIQUE DISPONIBLE DANS UN TABLEAU DE BORD

(84) Benannte Vertragsstaaten:
**DE FR GB**

(30) Priorität: **11.10.2001   DE 10150378**

(43) Veröffentlichungstag der Anmeldung:
**14.07.2004   Patentblatt 2004/29**

(73) Patentinhaber: **ROBERT BOSCH GMBH**
**70442 Stuttgart (DE)**

(72) Erfinder:
• **MENTGEN, Dirk**
  **71701 Schwieberdingen (DE)**
• **BUCHHOLZ, Frank**
  **71735 Hochdorf (DE)**

(56) Entgegenhaltungen:
**DE-A- 19 829 150          DE-A- 19 857 916**
**DE-A- 19 920 842          US-A- 5 598 088**

EP 1 436 168 B1

**Beschreibung**

Technisches Fachgebiet

Die vorliegende Erfindung betrifft ein Verfahren und eine Vorrichtung zur Ermittlung der in einem Energieversorgungssystem, insbesondere einem Bordnetz verfügbaren Leistung, die von einer Batterie und einem Generator bereitgestellt wird.

Der Leistungsbedarf elektrischer Verbraucher in Kraftfahrzeugen steigt durch die zunehmende Anzahl an Komfortverbrauchern und die Elektrifizierung von Nebenaggregaten stark an. In bestimmten Betriebszuständen reicht die vom Generator (Lichtmaschine) zur Verfügung gestellte elektrische Leistung nicht mehr aus, den gesamten Leistungsbedarf zu decken. Um gezielte Maßnahmen im Rahmen eines elektrischen Energie- bzw. Verbrauchermanagements einleiten zu können, ist eine Aussage über das aktuelle Verhältnis von Leistungsangebot und -nachfrage erforderlich.

Beim Einsatz sicherheitskritischer elektrischer Verbraucher, wie beispielsweise elektromechanischen Bremsen (EMB), in einem Kraftfahrzeug-Bordnetz, muss die Energieversorgung dieses Systems ständig überwacht werden, um einen Ausfall rechtzeitig erkennen und Gegenmaßnahmen einleiten zu können. Zu diesem Zweck umfassen moderne Bordnetze ein Energie- bzw. Verbrauchermanagementsystem, mit dem die Fahrzeugbatterie vor dem Einschalten einer Last auf ihre Leistungsfähigkeit geprüft werden kann. Besteht die Gefahr, bestimmte Belastungsgrenzen der Batterie zu überschreiten, können entweder Maßnahmen zur Erhöhung der Leistungsfähigkeit der Batterie, z.B. durch Erhöhung der Ladespannung, oder Maßnahmen zur Reduzierung der Batteriebelastung, insbesondere das Abschalten oder Dimmen von Verbrauchern durchgeführt werden.

Ein Kraftfahrzeug-Bordnetz wird üblicherweise durch eine Batterie sowie, bei laufendem Motor, von einem Generator (Lichtmaschine) versorgt. Die Belastbarkeit bzw. Leistungsfähigkeit einer Fahrzeugbatterie kann mittels geeigneter Batteriemodelle abgeschätzt werden, woraus sich ermitteln läßt, ob bestimmte Verbraucher zuschaltbar sind oder belastungsreduzierende Maßnahmen eingeleitet werden müssen, um einen Ausfall sicherheitskritischer Einrichtungen zu verhindern. Ein solches Batteriemodell ist beispielsweise in der DE-P 101 065 08.6 beschrieben. Die vom Generator zu Verfügung gestellte Leistung wird dabei jedoch nicht berücksichtigt.

Über ein sogenanntes DF-Signal (Regelsignal, mit dem die Erregung des Generators aktiviert bzw. deaktiviert wird) kann zwar der Auslastungsgrad des Generators ermittelt werden. Ein Rückschluß auf die aktuelle Leistungsabgabe und vor allem die aktuelle Leistungsreserve des Generators ist dabei jedoch nicht möglich, da die Leistungsabgabe des Generators stark vom jeweiligen Betriebszustand (Temperatur, Spannung, Drehzahl, Auslastung) abhängt.

Aus der DE 198 29 150 A sind Verfahren und Vorrichtungen zur allgemeinen Energieverteilung in einem Kraftfahrzeug bekannt. Dabei wird ein Fahrzeugkoordinator und ein Koordinator für das Bordnetz eingesetzt, die miteinander zusammenwirken. Der Bordnetzkoordinator stellt das Potenzial der zur Verfügung stehenden elektrischen Leistung wenigstens eines Generators und wenigstens einer Batterie, die Bestandteil des Bordnetzes sind, auf. Die Ermittlung des Potenzials wird mittels einer Generator-Zustandserkennung und Batterie-Zustandserkennung durchgeführt.

Es ist daher die Aufgabe der vorliegenden Erfindung, ein Verfahren bzw. eine Anordnung zu schaffen, mit der die vom Generator zur Verfügung stehende Leistung genauer bestimmt werden kann, um diese Information für ein optimaleres Energie- bzw. Verbrauchermanagement zu nutzen.

Gelöst wird diese Aufgabe durch die in den Patentansprüchen 1 bzw. 15 angegebenen Merkmale. Weitere Ausgestaltungen der Erfindung sind Gegenstand von Unteransprüchen.

Der wesentliche Gedanke der Erfindung besteht darin, die in einem Kraftfahrzeug-Bordnetz zur Verfügung stehende elektrische Leistung, die von einer Batterie und einem Generator bereitgestellt wird, nicht allein durch Auswertung eines Batteriemodells zu ermitteln, sondern zusätzlich ein Generatormodell einzurichten, mit dem die vom Generator verfügbare Reserveleistung genau berechnet werden kann. Die aus dem Batteriemodell und dem Generatormodell ermittelten Reserveleistungen werden schließlich bilanziert, um die im Bordnetz zur Verfügung stehende Reserveleistung bzw. ein Leistungsdefizit zu berechnen.

Das Generatormodell kann sowohl als Software als auch als Hardware (Schaltung) ausgeführt sein. Gemäß einer bevorzugten Ausführungsform der Erfindung werden dem Generatormodell die Generatorspannung, die Generatordrehzahl sowie die Generatortemperatur bzw. Größen zugeführt, aus denen sich die zuerst genannten Parameter ableiten lassen (wie z.B. die Kühlmitteltemperatur, aus der sich die Generatortemperatur abschätzen läßt). Durch Verwendung des Generatormodells kann die aktuell zur Verfügung stehende elektrische Leistung und die Leistungsreserve des Generators in Abhängigkeit vom Betriebszustand (Spannung, Drehzahl, Temperatur, Auslastung) des Generators ermittelt werden.

Bei dem Generatormodell handelt es sich vorzugsweise um ein Programm, in dem Generatorkennlinien hinterlegt sind, die den Verlauf der Generatorspannung bzw. -Leistung in Abhängigkeit von bestimmten Betriebsparametern wiedergeben.

Die aus der Leistungsbilanzierung erhaltene Information über die im Bordnetz vorhandene Reserveleistung wird für ein Verbrauchermanagement genutzt. Beispielsweise können Belastungsgrenzen von Batterie und/oder Generator vorgegeben werden, die beim Zuschalten eines Verbrauchers nicht überschritten werden sollen.

Die zu erwartende Reaktion (Spannungsabfall, Steigung der Auslastung) der Batterie oder des Generators bei Zuschalten eines definierten Verbrauchers, kann z.B. mittels eines geeigneten Modells vorhergesagt werden. Das Modell vergleicht dazu z.B. einen vorgegebenen maximalen Auslastungsgrad mit dem zu erwartenden Auslastungsgrad nach dem Zuschalten eines Verbrauchers. Mittels eines derartigen Vergleichs ist eine eindeutige Aussage darüber möglich, ob die Batterie bzw. der Generator eine für den sicheren Betrieb des betrachteten Verbrauchers geforderte minimale Spannung zur Verfügung stellen kann oder nicht.

Die Belastung der Batterie oder des Generators kann stufenweise begrenzt werden, das heißt, es können unterschiedliche Belastungsgrenzen vorgegeben werden, die für unterschiedliche Verbraucher gelten. Im Verbrauchermanagement (Steuereinheit mit Management-Programm) kann z.B. vorgesehen sein, daß oberhalb einer vorgegebenen Belastung des Bordnetzes nur noch bestimmte Verbraucher zugeschaltet werden können, andere jedoch nicht.

Bei Überschreiten der vorgegebenen Belastungsgrenzen werden vorzugsweise Gegenmaßnahmen eingeleitet. Bei Erkennung eines Leistungsdefizit können Stabilisierungsmaßnahmen, wie z.B. die Anhebung der Leerlaufdrehzahl des Motors durchgeführt oder das Abschalten bzw. Dimmen von Verbrauchern eingeleitet werden.

Gemäß einer bevorzugten Ausgestaltung der Erfindung wird das Überschreiten der vorgegebenen Grenzwerte angezeigt.

Bei ausreichender Leistungsreserve im Bordnetz kann die überschüssige Leistung für ein Batteriethermomanagement verwendet werden, d.h., die Batterie kann beheizt werden, wodurch sie ein besseres Ladeverhalten zeigt.

Gemäß einer bevorzugten Ausführungsform der Erfindung werden dem Batteriemodell Batteriemeßwerte, insbesondere die Batteriespannung bzw. der von der Batterie gelieferte Strom, zugeführt, anhand derer die im Batteriemodell zugrundeliegenden Modellparameter im Falle von Abweichungen angepaßt werden. Auf diese Weise folgt das Batteriemodell dynamisch dem aktuellen Zustand der Batterie, der sich bekanntlich während der Lebensdauer stetig verschlechtert.

In ähnlicher Weise werden auch dem verwendeten Generatormodell Generator-Messwerte, insbesondere die Generatorspannung, die Generatordrehzahl und/oder die Generatortemperatur, zugeführt. Im Gegensatz zum Batteriemodell ist das Generatormodell jedoch vorzugsweise statisch. Die dem Generatormodell zugrundeliegenden Kennlinien, die durch Prüfstand-Messungen in Abhängigkeit von Temperatur, Belastung, etc. ermittelt wurden, werden vorzugsweise nicht verändert.

Gemäß einer bevorzugten Ausführungsform der Erfindung wird die Generatorspannung bis zu einem vorgegebenen Auslastungsgrad des Generators abgeschätzt. Erst ab einem vorgegebenen Auslastungsgrad von beispielsweise 90% (der über das DF-Signal erhalten werden kann) wird die Generatorspannung aus der Batteriespannung und einer auf der Anschlussleitung zur Batterie abfallenden Spannung berechnet.

Zeichnungen

Die Erfindung wird nachstehend anhand der beigefügten Zeichnungen beispielhaft näher erläutert. Es zeigen:

Figur 1 ein schematisches Blockschaltbild eines Systems zur Ermittlung der gesamten in einem Bordnetz zur Verfügung stehenden Reserveleistung;

Figur 2 ein Funktionsschaltbild eines Generatormodells;

Figur 3 ein Funktionsschaltbild eines Batteriemodells; und

Figur 4 ein vereinfachtes Ersatzschaltbild für ein elektrisches Bordnetz.

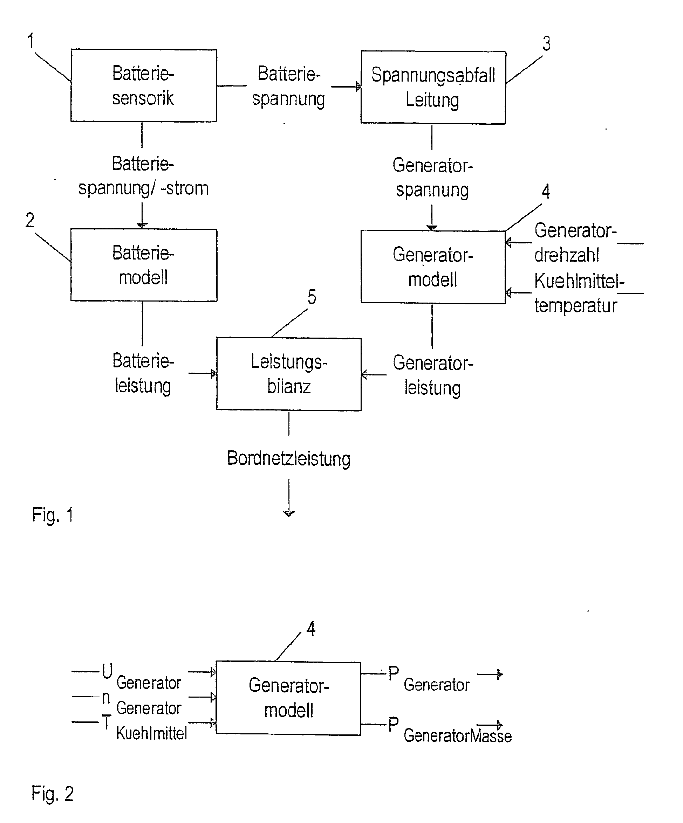

Figur 1 zeigt ein schematisches Schaltbild einer Anordnung zur Ermittlung der in einem Bordnetz zur Verfügung stehenden Leistung, dessen zentrale Bestandteile ein Batteriemodell 2 und Generatormodell 4 sind. Das Batterie- und Generatormodell sind als Software in einer Datenverarbeitungseinrichtung implementiert.

Dem Batteriemodell 2 werden von einer Batteriesensorik 1 gemessene Batteriemeßwerte, insbesondere die Batteriespannung oder der Batteriestrom zugeführt. Aus diesen Vorgaben lassen sich der Ladezustand (State of Charge) sowie die Leistungsfähigkeit (State of Health) der Batterie ermitteln. Daraus läßt sich wiederum feststellen, ob eine Belastung der Batterie, die durch das Zuschalten eines bestimmten Verbrauchers erfolgen würde, eine vorgegebene Belastungsgrenze, wie z.B. eine Spannungsgrenze $U_{Grenz}$ unterschritten würde. Die Spannungsgrenzen sind dabei derart gesetzt, daß der Betrieb sicherheitsrelevanter Einrichtungen nicht gefährdet wird.

Die Spannungsgrenzen können bei der Erkennung einer Abnahme der Batterieleistungsfähigkeit, z. B. durch Batteriealterung, nachgeführt werden.

Aus dem maximalen Laststrom, den die Batterie bis zum Erreichen einer Belastungsgrenze $U_{Grenz}$ treiben kann, sowie dem aktuellen Batterieinnenwiderstand $R_{Batterie}$ kann die Batteriereserveleistung $\Delta P_{Batterie}$ ermittelt werden.

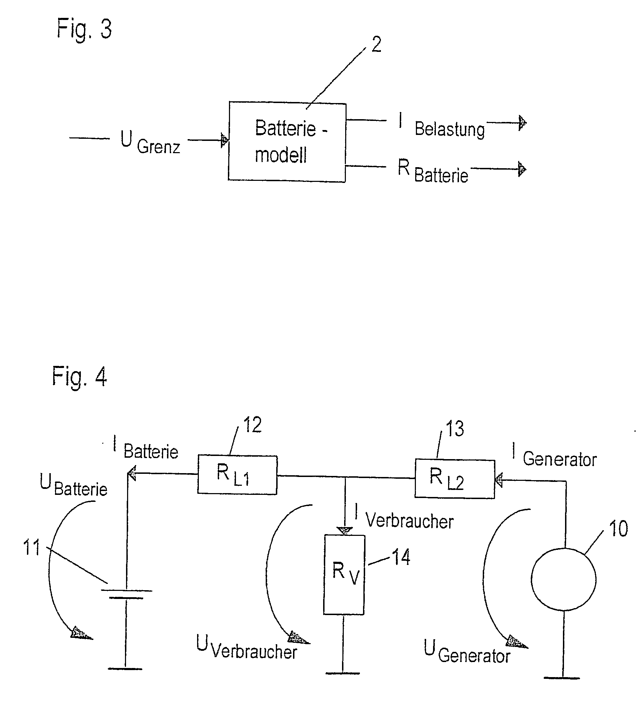

Figur 3 zeigt ein Batteriemodell mit Batteriezustandserkennung. Dem Batteriemodell wird eine Grenzspannung $U_{Grenz}$ vorgegeben aus der es den bis zum Erreichen der Spannungsgrenze $U_{Grenz}$ lieferbaren Strom $I_{Belastung}$ sowie den Batterieinnenwiderstand $R_{Batterie}$ ermittelt. Für die Batteriereserveleistung $\Delta P_{Batterie}$ gilt:

$$\Delta P_{Batterie} = I^2_{Belastung} * R_{Batterie}.$$

Die vom Generator zur Verfügung stehende Reserveleistung $\Delta P_{Generator}$ wird wie folgt ermittelt (vgl. Fig. 1 und 2) : Das Generatormodell 4 ermittelt zunächst die aktuelle maximale Generatorleistung $P_{GeneratorMax}$.

Die Eingangsgrößen des Generatormodells 4 von Fig. 2 sind die Generatorspannung $U_{Generator}$, die Generatordrehzahl $n_{Generator}$ (die in festem Verhältnis zur Motordrehzahl steht)und die Generatorkühlmitteltemperatur $T_{kühlmittel}$ (die in festem Verhältnis zur Generatortemperatur steht.

Die Generatorspannung $U_{Generator}$ wird über einen Spannungsabfall $\Delta U_{Leitung}$ an der Anschlussleitung 3 zwischen Batterie und Generator und aus der Batteriespannung berechnet. Es gilt:

$$U_{Generator} = U_{Batterie} + \Delta U_{Leitung} \qquad (1)$$

Daraus ermittelt das Generatormodell 4 die aktuelle Generatorleistung $P_{Generator}$. Für die vom Generator zur verfügung stehende Generatorreserveleistung $\Delta P_{Generator}$ gilt:

$$\Delta P_{generator} = P_{GeneratorMax} - P_{Generator}.$$

Die insgesamt im System zur Verfügung stehende Reserveleistung bzw. ein Leistungsdefizit wird mittels einer Leistungsbilanz 5 (in einer Recheneinheit) ermittelt. Für den aktuellen gesamten Leistungsüberschuß bzw. das -Defizit im Bordnetz $\Delta P_{Bordnetz}$ gilt:

$$\Delta P_{Bordnetz} = \Delta P_{Batterie} + \Delta P_{Generator}.$$

Eine alternative Möglichkeit zur Ermittlung der Generatorleistung besteht darin, die Generatorspannung $U_{Generator}$ aus der Batteriespannung $U_{Batterie}$, dem Batteriestrom $I_{Batterie}$ und der Verbraucherleistung $P_{Verbraucher}$ zu ermitteln. Zur Ermittlung von Batteriespannung $U_{Batterie}$ und -Strom $I_{Batterie}$ ist eine entsprechende Sensorik erforderlich. Die Verbraucherleistung $P_{Verbraucher}$ kann über den Verbraucherzustand (Ein/Aus) und bekannte Verbraucher-Leistungsparameter bestimmt werden. Ein vereinfachtes Ersatzschaltbild des elektrischen Bordnetzes ist in Figur 4 dargestellt.

Der Generator 10 ist über eine Anschlußleitung 13 an einem Verbraucher 14 mit einem Widerstand $R_V$ und über eine weitere Leitung 12 mit einer Batterie 11 verbunden. Zur Ermittlung der Generatorspannung $U_{Generator}$ können folgende Gleichungen aufgestellt werden:

$$U_{Generator} = I_{Generator} * R_{L2} + U_{Verbraucher},$$

$$I_{Generator} = I_{Batterie} + I_{Verbraucher},$$

$$I_{Verbraucher} = P_{Verbraucher}/(I_{Batterie} * R_{L1} + U_{Batterie});$$

und

$$U_{Verbraucher} = I_{Batterie} * R_{L1} + U_{Batterie}.$$

Die auf diese Weise ermittelte Generatorspannung kann an Stelle der Abschätzung (1) als Eingangsgröße für das Generatormodell 4 von Figur 2 verwendet werden.

Nachteil bei dieser Methode ist allerdings der relative hohe Parametrierungsaufwand der einzelnen Verbraucherparameter, welcher zudem vom Austattungsgrad des Fahrzeugs abhängig ist.

Verfahren und Vorrichtung zur Ermittlung der in einem Bordnetz verfügbaren elektrischen Leistung

Bezugszeichenliste

1 Batteriesensorik
2 Batteriemodell
3 Leitung
4 Generatormodell
5 Leistungsberechnung
10 Generator
11 Batterie
12 Batterie-Anschlußleitung
13 Generator-Anschlußleitung
14 Verbraucher

**Patentansprüche**

1. Verfahren zur Ermittlung der in einem Energieversorgungssystem, insbesondere einem elektrischen Bordnetz, verfügbaren elektrischen Leistung, die von einer Batterie (11) und einem Generator (10) bereitgestellt wird, umfassend folgende Schritte:

- Ermitteln einer Batteriereserveleistung ($\Delta P_{Batterie}$) mittels eines Batteriemodells (2);
- Ermitteln einer Generatorreserveleistung ($\Delta P_{Generator}$) mittels eines Generatormodells (4); und
- Berechnen der gesamten zur Verfügung stehenden Reserveleistung aus der Batteriereserveleistung ($\Delta P_{Batterie}$) und der Generatorreserveleistung ($\Delta P$ Generator), **dadurch gekennzeichnet, dass**
- das Generatormodell (4) als Eingangsgrößen die Generatorspannung ($U_{Generator}$), die Generatordrehzahl ($n_{Generator}$) und Generatortemperatur ($T_{Generator}$) bzw. Größen erhält, aus denen die zuvor genannten Parameter ableitbar sind
- und dass die dem Generatormodell (4) zugeführte Generatorspannung ($U_{Generator}$) bis zu einem vorgegebenen Auslastungsgrade des Generators abgeschätzt wird.

2. Verfahren nach Anspruch 1 **dadurch gekennzeichnet, dass** das Batteriemodell (2) anhand von Batteriemesswerten, die von einer Batterie-Sensorik (1) aufgenommen werden, an den aktuellen Zustand der Batterie angepasst wird.

3. Verfahren nach einem der vorhergehenden Ansprüche,
**dadurch gekennzeichnet, dass** das Generatormodell (4) statisch ist.

4. Verfahren nach einem der vorhergehenden Ansprüche, **dadurch gekennzeichnet, dass** das Batteriemodell (2) eine Batteriezustandserkennung umfasst, mit der die Leistungsfähigkeit der Batterie abschätzbar ist.

**5.** Verfahren nach Anspruch 4 **dadurch gekennzeichnet, dass** die Generatorspannung ($U_{Generator}$) oberhalb des vorgegebenen Auslastungsgrades aus der Batteriespannung ($U_{Batterie}$) und der an einer Anschlußleitung (13) abfallenden Spannung ($U_{L2}$) berechnet wird.

**6.** Verfahren nach einem der vorhergehenden Ansprüche, **dadurch gekennzeichnet, dass** die Information über die im Bordnetz zu Verfügung stehende Leistung für ein Verbrauchermanagement von im Bordnetz angeschlossenen Verbrauchern genutzt wird.

**7.** Verfahren nach einem der vorhergehenden Ansprüche, **dadurch gekennzeichnet, dass** für die Belastung des Energieversorgersystems und insbesondere für die Belastung der Batterie oder des Generators Grenzwerte ($U_{Grenz}$) festlegbar sind.

**8.** Verfahren nach Anspruch 7, **dadurch gekennzeichnet, dass** energieverbrauchsreduzierende Maßnahmen eingeleitet werden, falls einer der vorgegebenen Grenzwerte ($U_{Grenz}$) unterschritten wird oder droht, unterschritten zu werden.

**9.** Verfahren nach Anspruch 7 oder 8 **dadurch gekennzeichnet, dass** ein Unterschreiten eines der Grenzwerte ($U_{Grenz}$) angezeigt wird.

**10.** Verfahren nach einem der vorhergehenden Ansprüche, **dadurch gekennzeichnet, dass** das Zuschalten eines Verbrauchers (14) nur bei ausreichender Reserveleistung möglich ist.

**11.** Verfahren nach einem der vorhergehenden Ansprüche **dadurch gekennzeichnet, dass** vom Bordnetz bereitgestellte Leistungsreserven für ein Batteriethermomanagement genutzt werden.

**12.** Verfahren nach Anspruch 7 oder 8 **dadurch gekennzeichnet, dass** bei Unterschreiten eines der Grenzwerte ($U_{Grenz}$) vorgegebene Verbraucher gedimmt oder ausgeschaltet werden.

**13.** Anordnung zur Ermittlung der in einem Energieversorgungssystem, insbesondere einem Bordnetz verfügbaren elektrischen Leistung, die von einer Batterie und einem Generator bereitgestellt wird, umfassend eine Recheneinheit mit:

- einem Batteriemodell zur Ermittlung der aus der Batterie verfügbaren Reserveleistung ($\Delta P_{Batterie}$); und
- einem Generatormodell (4) zur Ermittlung der vom Generator verfügbaren Reserveleistung ($\Delta P_{Generator}$);

wobei die Recheneinheit in der Lage ist, die gesamte Im Bordnetz zur Verfügung stehende Reserveleistung ($\Delta P_{Bordnetz}$) aus der Batteriereserveleistung ($\Delta P_{Batterie}$) und der Generatorreserveleistung ($\Delta P_{Generator}$) zu berechnen, **dadurch gekennzeichnet,**

- **dass** das Generatormodell (4) als Eingangsgrößen die Generatorspannung ($U_{Generator}$), die Generatordrehzahl ($n_{Generator}$) und Generatortemperatur ($T_{Generator}$) bzw. Größen erhält, aus denen die zuvor genannten Parameter ableitbar sind
- und **dass** die dem Generatormodell (4) zugeführte Generatorspannung ($U_{Generator}$) bis zu einem vorgegebenen Auslastungsgrade des Generators abgeschätzt wird.

**14.** Anordnung nach Anspruch 13, **dadurch gekennzeichnet, dass** eine Batteriesensorik (1) zur Ermittlung von Batteriestrom ($I_{Batterie}$) und -Spannung ($U_{Batterie}$) vorgesehen ist.

**Claims**

**1.** Method for determining the electrical power available in a power supply system, in particular an electric vehicle on-board power system, which is made available by a battery (11) and a generator (10), comprising the following steps:

- determination of a battery reserve power ($\Delta P_{battery}$) by means of a battery model (2);

- determination of a generator reserve power ($\Delta P_{generator}$) by means of a generator model (4); and
- calculation of the entire available reserve power from the battery reserve power ($\Delta P_{battery}$) and the generator reserve power ($\Delta P_{generator}$), **characterized in that**
- the generator model (4) receives, as input variables, the generator voltage ($U_{generator}$), the generator rotational speed ($n_{generator}$) and the generator temperature ($T_{generator}$) or variables from which the previously mentioned parameters can be derived,
- and **in that** the generator voltage ($U_{generator}$) which is supplied to the generator model (4) is estimated until a predefined utilization factor of the generator is formed.

2. Method according to Claim 1, **characterized in that** the battery model (2) is adapted to the current state of the battery by means of battery measured values which are recorded by a battery sensor system (1).

3. Method according to one of the preceding claims, **characterized in that** the generator model (4) is static.

4. Method according to one of the preceding claims, **characterized in that** the battery model (2) comprises a battery state detection means with which the efficiency of the battery can be estimated.

5. Method according to Claim 4, **characterized in that** above the predefined utilization factor the generator voltage ($U_{generator}$) is calculated from the battery voltage ($U_{battery}$) and the voltage ($U_{L2}$) which drops across a connecting line (13).

6. Method according to one of the preceding claims, **characterized in that** the information about the power which is available in the vehicle on-board power system is used for a load management system for connected loads in the vehicle on-board power system.

7. Method according to one of the preceding claims, **characterized in that** limiting values ($U_{limit}$) can be defined for the loading on the power supply system, and in particular for the loading on the battery or the generator.

8. Method according to Claim 7, **characterized in that** power-consumption-reducing measures are initiated if one of the predefined limiting values ($U_{limit}$) is undershot or risks being undershot.

9. Method according to Claim 7 or 8, **characterized in that** undershooting of one of the limiting values ($U_{limit}$) is displayed.

10. Method according to one of the preceding claims, **characterized in that** the connection of a load (14) into the circuit is possible only if there is sufficient reserve power.

11. Method according to one of the preceding claims, **characterized in that** power reserves which are made available by the vehicle on-board power system are utilized for a battery thermo-management system.

12. Method according to Claim 7 or 8, **characterized in that** when one of the limiting values ($U_{limit}$) is undershot, predefined loads are dimmed or switched off.

13. Arrangement for determining the electric power available in a power supply system, in particular a vehicle on-board power system, which is made available by a battery and a generator, comprising a computing unit having:

   - a battery model for determining the reserve power ($\Delta P_{battery}$) which is available from the battery; and
   - a generator model (4) for determining the reserve power ($\Delta P_{generator}$) which is available from the generator;

wherein the computing unit is capable of calculating the entire reserve power ($\Delta P_{on-board\ system}$) which is available in the vehicle on-board power system from the battery reserve power ($\Delta P_{battery}$) and the generator reserve power ($\Delta P_{generator}$), **characterized**

   - **in that** the generator model (4) receives, as input variables, the generator voltage ($U_{generator}$), the generator rotational speed ($n_{generator}$) and the generator temperature ($T_{generator}$) or variables from which the previously mentioned parameters can be derived,
   - and **in that** the generator voltage ($U_{generator}$) which is supplied to the generator model (4) is estimated until a predefined utilization factor of the generator is formed.

**14.** Arrangement according to Claim 13, **characterized in that** a battery sensor system (1) is provided for determining the battery current ($I_{battery}$) and battery voltage ($U_{battery}$).

**Revendications**

**1.** Procédé permettant de déterminer la puissance électrique disponible dans un système d'alimentation en énergie, en particulier un réseau électrique de bord, et fournie par une batterie (11) et un générateur (10), comprenant les étapes suivantes consistant à :

- déterminer une puissance de réserve d'une batterie ($\Delta P_{Batterie}$) au moyen d'un modèle de batterie (2) ;
- déterminer une puissance de réserve d'un générateur ($\Delta P_{Générateur}$) au moyen d'un modèle de générateur (4), et
- calculer la puissance de réserve totale disponible à partir de la puissance de réserve de la batterie ($\Delta P_{Batterie}$) et de la puissance de réserve du générateur ($\Delta P_{Générateur}$),

**caractérisé en ce que**

- le modèle de générateur (4) reçoit comme grandeurs d'entrée la tension du générateur ($U_{Générateur}$), le nombre de tours du générateur ($n_{Générateur}$) et la température du générateur ($T_{Générateur}$) ou des grandeurs à partir desquelles les paramètres susmentionnés peuvent être déduits, et
- la tension du générateur ($U_{Générateur}$) amenée au modèle de générateur (4) est estimée jusqu'à un degré prédéfini d'utilisation du générateur.

**2.** Procédé selon la revendication 1,
**caractérisé en ce que**
le modèle de batterie (2) est adapté, à l'état actuel de la batterie, à l'aide de valeurs de mesures de la batterie enregistrées par un système de détection (1) de la batterie.

**3.** Procédé selon l'une des revendications précédentes,
**caractérisé en ce que**
le modèle de générateur (4) est statique.

**4.** Procédé selon l'une des revendications précédentes,
**caractérisé en ce que**
le modèle de batterie (2) comprend une détection d'état de la batterie permettant d'estimer la capacité de puissance de la batterie.

**5.** Procédé selon la revendication 4,
**caractérisé en ce que**
la tension du générateur ($U_{Générateur}$) au-dessus du degré prédéfini d'utilisation est calculée à partir de la tension de la batterie ($U_{Batterie}$) et de la tension ($U_{L2}$) tombant sur une ligne de raccordement (13).

**6.** Procédé selon l'une des revendications précédentes,
**caractérisé en ce que**
l'information sur la puissance disponible dans le réseau de bord est utilisée pour une gestion des consommateurs de courant raccordés dans le réseau de bord.

**7.** Procédé selon l'une des revendications précédentes,
**caractérisé en ce que**
des valeurs limites ($U_{Limite}$) peuvent être fixées pour la charge du système d'alimentation en énergie et en particulier pour la charge de la batterie ou du générateur.

**8.** Procédé selon la revendication 7,
**caractérisé en ce que**
des mesures réduisant la consommation d'énergie sont introduites si l'on passe ou si on risque de passer en dessous d'une des valeurs limites ($U_{Limite}$) prédéfinies.

**9.** Procédé selon la revendication 7 ou 8,

**caractérisé en ce qu'**
un affichage indique si on passe en dessous de l'une des valeurs limites ($U_{Limite}$).

10. Procédé selon l'une des revendications précédentes,
    **caractérisé en ce que**
    l'enclenchement d'un consommateur de courant (14) n'est possible que si la puissance de réserve est suffisante.

11. Procédé selon l'une des revendications précédentes,
    **caractérisé en ce que**
    des réserves de puissance fournies par le réseau de bord sont utilisées pour une gestion thermique de la batterie.

12. Procédé selon la revendication 7 ou 8,
    **caractérisé en ce que**
    si on passe sous l'une des valeurs limites ($U_{Limite}$), des consommateurs de courant prédéfinis sont atténués ou désactivés.

13. Dispositif permettant de déterminer la puissance électrique disponible dans un système d'alimentation en énergie, en particulier un réseau électrique de bord, qui est fournie par une batterie et un générateur, comprenant une unité de calcul avec :

    - un modèle de batterie pour déterminer la puissance de réserve ($\Delta P_{Batterie}$) disponible de la batterie et
    - un modèle de générateur (4) pour déterminer la puissance de réserve ($\Delta P_{Générateur}$) disponible du générateur ;
    l'unité de calcul étant en mesure de calculer la puissance de réserve totale disponible dans le réseau de bord (($\Delta P_{RéseauBord}$) à partir de la puissance de réserve de la batterie ($\Delta P_{Batterie}$) et de la puissance de réserve du générateur ($\Delta P_{Générateur}$),

    **caractérisé en ce que**

    - le modèle de générateur (4) reçoit comme grandeurs d'entrée la tension du générateur ($U_{Générateur}$), le nombre de tours du générateur ($n_{Générateur}$) et la température du générateur ($T_{Générateur}$) ou des grandeurs à partir desquelles les paramètres susmentionnés peuvent être déduits, et
    - la tension du générateur ($U_{Générateur}$) amenée au modèle de générateur (4) est estimée jusqu'à un degré prédéfini d'utilisation du générateur.

14. Dispositif selon la revendication 13,
    **caractérisé en ce qu'**
    un système de détection de la batterie (1) est prévu pour déterminer le courant ($I_{Batterie}$) et la tension ($U_{Batterie}$) de la batterie.

1

Batteriesensorik

Batteriespannung

3

Spannungsabfall
Leitung

Batterie-
spannung/ -strom

Generatorspannung

4

2

Batteriemodell

Generatormodell

Generatordrehzahl

Kuehlmitteltemperatur

5

Batterie-
leistung

Leistungsbilanz

Generatorleistung

Bordnetzleistung

Fig. 1

4

$U_{Generator}$

$n_{Generator}$

$T_{Kuehlmittel}$

Generatormodell

$P_{Generator}$

$P_{GeneratorMasse}$

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19829150 A